# EUROPÄISCHE PATENTSCHRIFT

(11) **EP 4 366 995 B1**
(45) Veröffentlichungstag und Bekanntmachung des Hinweises auf die Patenterteilung: **18.06.2025**
(21) Anmeldenummer: 22744442.9
(22) Anmeldetag: 05.07.2022
(51) Int. Cl.: B60T 13/74, F16D 63/00, F16D 121/28

(54) **VORRICHTUNG MIT EINER MAGNETORHEOLOGISCHEN BREMSVORRICHTUNG UND VERFAHREN**
DEVICE HAVING A MAGNETORHEOLOGICAL BRAKE DEVICE, AND METHOD
APPAREIL COMPRENANT UN DISPOSITIF DE FREINAGE MAGNÉTO-RHÉOLOGIQUE ET PROCÉDÉ

(30) Priorität: 06.07.2021 DE 102021117398; 14.07.2021 DE 102021118223
(43) Veröffentlichungstag der Anmeldung: 15.05.2024
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2022/068556
(87) Internationale Veröffentlichungsnummer: WO 2023/280837

(56) Entgegenhaltungen:
- DE-A1- 102010 055 833
- DE-B3- 102020 106 328
- US-A1- 2002 110 704
- US-A1- 2003 071 238

## Beschreibung

Die vorliegende Erfindung betrifft eine Vorrichtung mit einer magnetorheologischen Bremsvorrichtung zum Bremsen von Relativbewegungen und ein entsprechendes Verfahren. Dabei umfasst eine erfindungsgemäße Vorrichtung bzw. die magnetorheologische Bremsvorrichtung wenigstens zwei Bremskomponenten, zwischen denen wenigstens ein Aufnahmeraum mit wenigstens einem Bremsspalt ausgebildet ist, wobei der Bremsspalt wenigstens teilweise mit einem magnetorheologischen Medium gefüllt ist, der durch ein Magnetfeld beeinflussbare polarisierbare Partikel enthält.

Im Stand der Technik sind verschiedenste magnetorheologische Bremsvorrichtungen bekannt geworden, die zum Abbremsen oder zum Dämpfen von Relativbewegungen dienen.

Eine Hauptanwendung von magnetorheologischen Flüssigkeiten ist ein Stoßdämpfer, bei dem die magnetorheologische Flüssigkeit von einer Kammer in eine andere Kammer strömt. Es können hier sowohl hohe Drücke als auch Strömungsgeschwindigkeiten herrschen. Das magnetorheologische Fluid bzw. die magnetorheologische Flüssigkeit enthält eine Vielzahl von entsprechend kleinen runden Partikeln, um strömungstechnisch vorteilhaft das Überströmen von einer Kammer in die andere Kammer zu ermöglichen. Ein geringer Strömungswiderstand ist wichtig, um eine geringe Grunddämpfung zu erzielen.

Weiterhin sind magnetorheologische Bremsvorrichtungen bekannt geworden, bei denen die Abbremsung der zwei zueinander bewegbaren Bremskomponenten über eine Scherbeanspruchung zwischen zwei zum Beispiel plattenförmigen Flächen gebremst wird. Zwischen den Platten befindet sich das magnetorheologische Fluid. Das Magnetfeld durchflutet die magnetorheologische Flüssigkeit senkrecht zu der Bewegungsrichtung der plattenförmigen Flächen. Eine solche Scherbeanspruchung wird insbesondere in Kupplungen und Bremsen eingesetzt. Wird ein Magnetfeld angelegt, so erfolgt eine Viskositätsänderung in sehr kurzer Zeit, da nur die magnetisch polarisierbaren Partikel ausgerichtet werden müssen. Somit sind Kraftänderungen innerhalb weniger Millisekunden realisierbar. Die Schubspannung verhält sich im magnetfeldfreien Raum wie bei einem Newtonschen Fluid und im Magnetfeld wie bei einem Bingham-Fluid. Durch das Magnetfeld werden die Partikel polarisiert und bilden Ketten in Richtung der Feldlinien.

Die JP 2013 181 598 A beschäftigt sich mit dem Problem, dass es in magnetorheologischen Flüssigkeiten zu Verklumpungen aufgrund von Sedimentation der Partikel kommen kann. Das kann beispielsweise auftreten, wenn eine magnetorheologische Bremse längere Zeit nicht bewegt wird. Zudem beschäftigt sich die JP 2013 181 598 A mit dem Problem, dass sich die Viskosität der magnetorheologischen Flüssigkeit erhöhen kann, wenn sie sich mit hoher Geschwindigkeit bzw. Scherrate dreht. Als Lösung wird vorgeschlagen, dass die magnetorheologische Flüssigkeit zusätzlich zu den ersten Partikeln (z. B. Carbonyleisenpartikel) noch zweite Partikel in Nanogröße aufweist. Durch diese Mischung wird die Viskositätszunahme der magnetorheologischen Flüssigkeit bei hohen Drehzahlen verringert und zugleich Sedimentation verhindert. Zudem sind beide Partikelarten mit jeweils einer Oberflächenmodifikationsschicht beschichtet. Dadurch wird die Affinität für das Dispersionsmittel (z. B. Silikonöl) verbessert.

Die US 2003/071238A1 offenbart eine magnetorheologische Vorrichtung mit unrunden magnetorheologischen Partikeln unterschiedlicher Größe. Ein reibungsminderndes Additiv wird dazu gegeben. Auch die US 2002/110704 A offenbart ein magnetorheologisches Fluid mit unrunden magnetorheologischen Partikeln.

In bestimmten Anwendungsfällen werden magnetorheologische Bremsvorrichtungen gewünscht, welche besonders kompakt sind und dabei ein besonders hohes Bremsmoment bereitstellen können. Bei einer Rotationsbremse mit kleinen Durchmessern von zum Beispiel 60 mm oder kleiner und einem zylindrischen Bremsspalt ist es schwierig, eine hohe Feldstärke in dem Bremsspalt (Wirkspalt) zu erzeugen, da der zentrale Kern oder auch andere Teile im Magnetkreislauf zuerst in Sättigung gehen. Ein hoher Spulenstrom der elektrischen Spule führte deshalb zu keiner Verbesserung, wenn Teile des Magnetkreislaufes in Sättigung sind. Je kleiner die Durchmesser werden, desto eher sättigt der Kern bzw. desto ungünstiger werden die Magnetkreisflächen zueinander. Das bedeutet, dass kleinere Aktoren noch geringere Flussdichten im Bremsspalt aufweisen.

Zur Erhöhung der Bremskraft ist mit der EP 2 616 704 B1 der Anmelderin ein Aufbau bekannt geworden, bei dem sich drehende Teile, wie zum Beispiel Walzen in dem Bremsspalt angeordnet sind. Diese Walzen beeinflussen gezielt den Verlauf des Magnetfelds, welches auf die magnetisch polarisierbaren Partikel (zum Beispiel Carbonyleisenpartikel) in dem magnetorheologischen Fluid einwirkt. Durch die Magnetfeldeinwirkung auf die magnetisch polarisierbaren Partikel bildet sich vor den sich drehenden runden Flächen der Walzen bzw. Drehkörper ein (geometrischer) Keil aus, der aus angehäuften Partikeln besteht. Die Walzen können daher auch als Magnetfeldkonzentratoren bezeichnet werden. Dadurch wird das Bremsmoment erhöht.

Mit der DE 10 2020 106 328 B3 der Anmelderin ist ein weiterer Aufbau bekannt geworden, bei dem die magnetisch polarisierbaren Partikel wie Carbonyleisenpartikel in dem Bremsspalt aufgrund einer besonderen Kontur der Kontaktflächen des Bremsspaltes einen (lokalen) Haufen bilden und durch die sich dadurch ergebende erhöhte Partikelkonzentration höhere Scherkräfte bewirken, wodurch höhere Bremsmomente erzeugt werden können. Dabei wird beispielsweise die radial innere Bremskomponente durch eine stern- oder zahnradartige Struktur gebildet, sodass der Bremsspalt über dem Umfang eine variable Spalthöhe aufweist, wenn zum Beispiel die äußere Bremskomponente auf dem Innenumfang zylindrisch ausgebildet ist.

Bei einer solchen Ausgestaltung wird eine starke Verkettung und Anhäufung von Partikeln realisiert, da der Bremsspalt nicht umlaufend eine konstante Höhe aufweist, sondern sich periodisch verjüngt, sodass sich benachbart zu diesen Bereichen Haufen von Partikeln ansammeln. Benachbart zu den Engstellen bilden sich keilförmige Haufen der magnetisch polarisierbaren Partikel aus, die ein erhöhtes Bremsmoment bewirken.

Grundsätzlich funktionieren die Ausgestaltungen gemäß der DE 10 2020 106 328 B3 oder auch der EP 2 616 704 B1 zufriedenstellend, wobei mit dem zuletzt genannten Aufbau, bei dem Drehkörper in dem Bremsspalt eingesetzt werden, noch höhere Bremsmomente erzielbar sind als bei der Variante, wo zum Beispiel eine Sternkontur im Bremsspalt für eine variable Spalthöhe sorgt. Obwohl zufriedenstellende Ergebnisse erzielt werden, ist es gewünscht, bei insbesondere gleicher Ausgangslage und bei gleichen Rahmenbedingungen (ähnliches Bauvolumen und ähnliches Material) das maximale Sperrmoment bzw. die maximale Sperrkraft merklich zu erhöhen und somit eine höhere Leistungsdichte zu erzielen.

Diese Aufgabe wird gelöst durch eine Vorrichtung mit den Merkmalen des Anspruchs 1 und durch das Verfahren nach Anspruch 14. Bevorzugte Weiterbildungen der Erfindung sind Gegenstand der Unteransprüche. Weitere Vorteile und Merkmale der vorliegenden Erfindung ergeben sich aus der allgemeinen Beschreibung und den Ausführungsbeispielen.

Eine erfindungsgemäße Vorrichtung umfasst eine oder wenigstens eine magnetorheologische Bremsvorrichtung zum Bremsen von Relativbewegungen. Die Bremsvorrichtung umfasst wenigstens zwei Bremskomponenten, wobei zwischen den Bremskomponenten ein Aufnahmeraum mit wenigstens einem Bremsspalt ausgebildet ist. Der Aufnahmeraum (und der Bremsspalt) enthält wenigstens ein durch ein Magnetfeld beeinflussbares magnetorheologisches Medium mit magnetisch polarisierbaren Partikeln (magnetorheologische Partikel). Weiterhin ist wenigstens ein Kern und wenigstens eine elektrische Spuleneinheit umfasst, um ein steuerbares Magnetfeld in dem Bremsspalt zu erzeugen. Wenigstens ein Teil der magnetisch polarisierbaren Partikel ist dazu ausgebildet, unter dem Einfluss des Magnetfeldes eine Verkantungsstruktur zu bilden und miteinander zu verklemmen oder zu verkeilen. (Das bildet praktisch einen Keil auf Partikelebene.) Bei mindestens 25% der magnetisch polarisierbaren Partikel beträgt ein Verhältnis von maximalem Durchmesser zu maximaler Quererstreckung senkrecht dazu größer 1,25, die als unrunde Partikel vorliegen.

Die erfindungsgemäße Vorrichtung hat viele Vorteile. Ein erheblicher Vorteil der erfindungsgemäßen Vorrichtung besteht darin, dass die magnetorheologischen Partikel des magnetorheologischen Mediums so ausgestaltet sind, dass sie miteinander eine Verkantungsstruktur bilden können, die sich untereinander verkanten oder verklemmen und dadurch eine deutlich festere Struktur bilden. Dadurch wird es möglich, ein erheblich größeres Bremsmoment zu erzeugen, als es im Stand der Technik möglich war. Die magnetisch wirkende Kräfte werden mechanisch durch die Verkantungsstruktur verstärkt.

Herkömmliche magnetorheologische Partikel müssen hingegen allein durch das Magnetfeld so fest aneinander gedrückt werden, dass das gewünschte Bremsmoment übertragen werden kann. Ist das Magnetfeld nicht stark genug, gleiten die herkömmlichen magnetorheologischen Partikel aneinander entlang. Im Gegensatz dazu können sich die magnetorheologischen Partikel der Erfindung aneinander verkanten, sodass sie auch bei geringeren magnetischen Kräften nicht ohne Weiteres aneinander entlang gleiten können.

In allen Ausgestaltungen ist es bevorzugt, dass die magnetisch polarisierbaren Partikel insbesondere durch Carbonyleisenpartikel gebildet werden.

Wird eine magnetorheologische Flüssigkeit verwendet, dann sind Flüssigkeiten am Markt mit 40 Volumenprozent erhältlich. (Eigene) Mischungen mit zwischen 40 und 50 Volumenprozent Carbonyleisen sind möglich. Mehr geht nicht, da die Trägerflüssigkeit das restliche Volumen beansprucht.

Wird Pulver ohne Trägerflüssigkeit verwendet, sind bis zu etwa 80 Volumenprozent Carbonyleisen (Eisenpulver) möglich, was das Bremsmoment stark erhöht, wenn die restlichen Auslegungsparameter darauf angepasst werden (z.B. sollte die Feldstärke pro Partikel hierbei in etwas gleichbleiben wie bei MR-Flüssigkeit, d.h. die Feldstärke im Bremsspalt bzw. Wirkspalt sollte beim Wechsel von LORD MRF 140 (40 Volumenprozent Carbonyleisen mit z.B. Öl als Trägerflüssigkeit) zu 80% Carbonyleisenpulver (ohne Tragerflüssigkeit) doppelt so hoch sein. Wir sprechen hier von magnetischen Feldstärke im Spalt von größer 200 kA/m bis auf Werte von bis zu 1.000 kA/m (1000000A/m) oder darüber.

Ein weiterer Vorteil von Pulver als Medium im Wirkspalt ist, dass es so zu keiner Sedimentation und auch keiner Haufenbildung im Sinne von "die Eisenpartikel bei MR-Flüssigkeiten werden in Richtung des Magnetfeldgradienten gezogen (die Kraft auf magnetisierbare Partikel wirkt immer in Richtung des stärkeren Magnetfelds, das Trägermedium wird verdrängt)" kommen muss, um so hohe Partikelkonzentrationen zu erhalten. Die maximale Partikelkonzentration liegt so schon an). Dies verbessert die Reproduzierbarkeit der Momente (es stellt sich bei gleichem Strom immer ein ähnliches Bremsmoment ein).

In allen Ausgestaltungen ist es besonders bevorzugt, dass die magnetisch polarisierbaren Partikel (zu einem erheblichen Teil) unrunde Partikel umfassen (nicht sphärische Partikel), bei denen ein Verhältnis von größtem Durchmesser zur größten Quererstreckung senkrecht dazu größer 1,5 beträgt. Möglich ist die Bildung dieses Verhältnisses auch als ein Verhältnis von größter Längserstreckung zur größten Quererstreckung, wobei insbesondere die Längs- und
Quererstreckungen senkrecht zueinander gemessen werden.

Der Einsatz von unrunden Partikeln ist besonders vorteilhaft, da diese eine effektive Verkantungsstruktur ermöglichen, da sich jeweils unterschiedliche unrunde Abschnitte der Partikel miteinander verklemmen bzw. miteinander verkeilen.

Möglich und bevorzugt sind auch Verhältnisse von größtem Durchmesser zu größter Quererstreckung senkrecht dazu von 1,75 oder 2,0 oder mehr.

Vorzugsweise ist wenigstens ein Teil der magnetisch polarisierbaren Partikel dazu ausgebildet, sich unter dem Einfluss des Magnetfeldes flächig miteinander zu verklemmen oder zu verkeilen. Das ist beispielsweise bei Partikeln möglich, die abschnittsweise eckig oder beispielsweise insgesamt dreieckig oder mehreckig oder dergleichen ausgebildet sind. Dann verklemmen zwei (oder mehr) entsprechend ausgestaltete Partikel miteinander und können eine sehr effektive Verklumpung der Partikel miteinander und Verklemmung und Abbremsung der beiden Bremskomponenten miteinander bewirken.

Vorzugsweise ist wenigstens ein Teil der magnetisch polarisierbaren Partikel dazu ausgebildet, sich unter dem Einfluss des Magnetfeldes an zwei oder mehr voneinander beabstandeten Stellen miteinander zu verklemmen bzw. zu verkeilen. Solche Partikel, die unrund ausgestaltet sind, erlauben eine sehr effektive Erhöhung der Bremskraft bzw. des Bremsmomentes, da sie im Unterschied zu sphärischen Partikeln sich nicht nur an einer Stelle bzw. in einem kleinen Winkelbereich berühren, sondern an mehreren Stellen oder sogar flächig.

Vorzugsweise weist wenigstens ein Teil der magnetisch polarisierbaren Partikel wenigstens einen Muldenabschnitt auf. Ein solcher nach innen gewölbter Muldenabschnitt erlaubt eine besonders effektive Verkeilung mit Teilen anderer Partikel.

Vorzugsweise ist wenigstens eine an den Bremsspalt angrenzende Oberfläche wenigstens einer Bremskomponente wenigstens abschnittsweise unglatt oder (lokal) uneben ausgebildet. Möglich ist es auch, dass die Partikel oder ein erheblicher Teil der magnetisch polarisierbaren Partikel regelmäßig oder unregelmäßig auf der äußeren Oberfläche Erhebungen oder Erhöhungen und/oder Vertiefungen aufweisen. Dadurch kann eine Verkantung mit den Partikeln verstärkt werden. Beispielsweise kann wenigstens eine Oberfläche Erhöhungen und/oder Vertiefungen in der Art von spitz oder abgerundet ausgebildeten Dimpels bei Golfbällen aufweisen. Möglich ist auch eine Oberfläche mit einem spitz oder abgerundet ausgebildeten Sägezahnprofil. Eine relative Höhe (wenigstens einiger) der Erhebungen oder Vertiefungen beträgt vorzugsweise wenigstens 5% oder 10% des minimalen Durchmessers eines magnetisch polarisierbaren Partikels.

In vorteilhaften Ausgestaltungen weist wenigstens ein Teil der magnetisch polarisierbaren Partikel wenigstens einen gewinkelten Strukturabschnitt auf. Gewinkelte Strukturen erlauben eine besonders effektive Verklemmung untereinander, sodass ein hohes Bremsmoment erzeugbar ist.

In allen Ausgestaltungen ist es bevorzugt, dass ein Vorsprung oder eine Kante eines Partikels mit einem Rücksprung oder einem Muldenabschnitt eines anderen Partikels verklemmt.

Es hat sich überraschenderweise herausgestellt, dass mit unrunden Partikeln besonders hohe Bremskräfte übertragbar sind, während andererseits auch ein niedriges Grundmoment erzeugbar ist. Das Leerlaufmoment (Grundmoment) nimmt wegen der Reduktion der Wirkflächen ab (die sich mit geringem Abstand zueinander bewegenden Flächen - diese erzeugen primär die Grundreibung - werden reduziert), was sehr vorteilhaft ist.

Das Verkanten der magnetisch polarisierbaren Partikel kann nicht nur zweidimensional, sondern dreidimensional stattfinden (also z. B. auch in axialer Richtung...).

Es hat sich herausgestellt, dass eine besonders effektive Verkantung und Verklemmung einzelner Partikel mit hohen magnetischen Feldstärken erzeugbar ist. Dazu wird vorzugsweise eine magnetische Feldstärke von größer als 150 Kiloampere/Meter (kA/m) oder von 250 Kiloampere/Meter oder 500kA/m oder mehr in dem Bremsspalt erzeugt. Insbesondere ist eine magnetische Feldstärke von größer als 500 Kiloampere/Meter (kA/m) oder von 750 Kiloampere/Meter oder 1000kA/m oder mehr in dem Bremsspalt erzeugbar bzw. wird dort erzeugt.

Für eine besonders effektive Erhöhung des erzielbaren Bremsmomentes bzw. der erzielbaren Bremskraft hat es sich als sehr vorteilhaft herausgestellt, die minimale Spalthöhe des Bremsspaltes zwischen den Bremskomponenten gegenüber den Abmessungen im Stand der Technik zu reduzieren. Es ist bevorzugt, dass die minimale Spalthöhe kleiner als ein Fünffaches des größten Durchmessers der magnetisch polarisierbaren Partikel in dem Bremsspalt ist. Insbesondere ist eine minimale Spalthöhe des Bremsspaltes zwischen den Bremskomponenten aber größer als das Doppelte der maximalen Quererstreckung senkrecht zu dem maximalen Durchmesser der magnetisch polarisierbaren Partikel in dem Bremsspalt. Möglich und bevorzugt ist es auch, dass die minimale Spalthöhe des Bremsspaltes zwischen den Bremskomponenten größer ist als das Dreifache der maximalen Quererstreckung senkrecht zu dem maximalen Durchmesser der magnetisch polarisierbaren Partikel in dem Bremsspalt. Dadurch wird ein niedriges Grundmoment bzw. eine niedrige Grundkraft gewährleistet, während gleichzeitig ein besonders hohes Bremsmoment bzw. eine besonders hohe Bremskraft erzeugbar ist.

Vorzugsweise liegt bei mindestens 10 % und insbesondere bei mindestens 20 % der magnetisch polarisierbaren Partikel ein Verhältnis von maximalem Durchmesser zu maximaler Quererstreckung von größer als 1,5 oder größer als 2,0 vor.

Besonders bevorzugt ist bei mindestens 33 % oder mindestens 50 % der magnetisch polarisierbaren Partikel ein Verhältnis von maximalem Durchmesser zu maximaler Quererstreckung senkrecht dazu größer 1,25 oder größer 1,5 oder größer 2,0.

Insbesondere weisen mindestens 10 % oder 25 % oder 33 % oder 50 % der magnetisch polarisierbaren Partikel einen maximalen Durchmesser und/oder eine maximale Quererstreckung von wenigstens 10 µm auf. Es hat sich herausgestellt, dass mit größeren Partikeln eine höhere Bremswirkung erzielbar ist als mit kleineren Partikeln. Deshalb ist es bevorzugt, dass mindestens 10 %, 25 % oder 33 % oder 50 % der magnetisch polarisierbaren Partikel einen maximalen Durchmesser von wenigstens 20 µm oder von wenigstens 30 µm oder von wenigstens 50 µm aufweisen. Kleinere Partikel können umfasst sein.

Es hat sich erstaunlicherweise herausgestellt, dass mit größeren Partikeln ein geringeres Grundmoment und ein höheres Bremsmoment (bzw. Grundkraft und Bremskraft) erzielbar ist.

In allen Ausgestaltungen ist es bevorzugt, dass wenigstens ein Belastungssensor wie ein Drehmomentsensor oder Drehmomentaufnehmer oder Drehmomentbeobachter und/oder ein Kraftsensor umfasst ist. Ebenso ist es bevorzugt, dass wenigstens ein Positionssensor zur Erfassung einer Winkelposition und/oder Relativposition umfasst ist.

Die Spuleneinheit oder wenigstens eine Spuleneinheit kann einen (zylindrischen) Spulendraht aufweisen. Es ist möglich, dass der Spulendraht aus einem Flachmaterial besteht. Möglich ist es auch, einen Draht mit angepasster Kontur aus Kupfer oder einem anderen geeigneten Werkstoff zu verwenden.

In bevorzugten Ausgestaltungen sind die beiden Bremskomponenten relativ zueinander verschwenkbar. Möglich ist es aber auch, dass die beiden Bremskomponenten linear zueinander bewegbar sind. Besonders bevorzugt sind die beiden Bremskomponenten relativ zueinander kontinuierlich drehbar.

Die elektrische Spuleneinheit oder mehrere Spuleneinheiten kann bzw. können radial und/oder axial um den Kern gewickelt sein.

Es ist bevorzugt, dass der Bremsspalt die Innenkomponente vollständig radial umgibt. Der Bremsspalt kann insbesondere als umlaufender Ringspalt ausgebildet sein.

Es ist möglich und bevorzugt, dass an wenigstens einer Bremskomponente eine zu der jeweils anderen Bremskomponente hin ragende Sternkontur oder dergleichen ausgebildet ist, welche eine über dem Umfang oder der Länge des Bremsspaltes variable Spalthöhe erzeugt bzw. zu Verfügung stellt. Durch radial abstehende Arme oder durch eine Sternkontur werden lokale Magnetfeldkonzentratoren gebildet, die zu einer lokalen Erhöhung der Feldstärke in dem Bremsspalt führen. Dadurch wird die Verkantung und Verklumpung einzelner unrunder Partikel miteinander verstärkt.

Es ist möglich, dass in wenigstens einem Spaltabschnitt des Bremsspaltes wenigstens ein Drehkörper angeordnet ist. Ein solcher Drehkörper kann beispielsweise als Kugel oder insbesondere als Walze ausgebildet sein und kann zusätzlich auch noch zu dem aus dem Stand der Technik beschriebenen (geometrischen) Keileffekt führen, der zusätzlich zu der Verklumpung bzw. der Verklemmung der Verkantungsstruktur führt. Dadurch wird das maximal erzeugbare Drehmoment bzw. es wird die maximal erzeugbare Bremskraft nochmals wesentlich verstärkt.

In allen Ausgestaltungen ist es möglich, dass das magnetorheologische Medium wenigstens eine Flüssigkeit als Trägermedium umfasst, in der die magnetisch polarisierbaren Partikel aufgenommen sind. Dabei beträgt der Anteil der magnetisch polarisierbaren Partikel insbesondere zwischen 25 und 50 Volumenprozent (in dem Aufnahmeraum). Insbesondere ist ein Volumenanteil zwischen 25 und 40 % an polarisierbaren Partikeln vorgesehen.

In besonders bevorzugten Ausgestaltungen umfasst das magnetorheologische Medium wenigstens ein Gas, welches die magnetisch polarisierbaren Partikel als Trägermedium umgibt. Dann ist es möglich, dass keine Flüssigkeit als Trägermedium vorgesehen ist. Bei (trockenen) magnetisch polarisierbaren Partikeln beträgt ein Anteil der Partikel in dem Aufnahmeraum insbesondere zwischen 40 und 90 Volumenprozent und vorzugsweise zwischen 50 und 80 Volumenprozent.

In allen Ausgestaltungen ist es bevorzugt, dass die Vorrichtung ein mit der magnetorheologischen Bremsvorrichtung verbundenes Bedienelement umfasst. Das Bedienelement kann beispielsweise als Bedienwalze ausgebildet sein und/oder einen Bedienknopf umfassen. Vorzugsweise ist die magnetorheologische Bremsvorrichtung wenigstens teilweise im Inneren des Bedienelements aufgenommen.

Es ist möglich und bevorzugt, dass das Bedienelement einen Außendurchmesser kleiner 75 mm und insbesondere kleiner 60 mm und vorzugsweise kleiner 50 oder kleiner 45 mm aufweist. Bei der Ausgestaltung als Bedienwalze kann das Bedienelement auch Durchmesser kleiner 25 mm oder kleiner 15 mm aufweisen.

In einer anderen Ausgestaltung, welche nicht unter den Schutzumfang des Anspruchs 1 fällt, weist die Vorrichtung zum Bremsen von Relativbewegungen wenigstens zwei Bremskomponenten auf, wobei zwischen den Bremskomponenten ein Aufnahmeraum mit einem Bremsspalt ausgebildet ist, der ein durch ein Magnetfeld beeinflussbares magnetorheologisches Medium mit magnetisch polarisierbaren Partikeln enthält. Es ist wenigstens eine elektrische Spuleneinheit umfasst, um ein steuerbares Magnetfeld in dem Bremsspalt zu erzeugen. Dabei ist eine minimale Spalthöhe des Bremsspaltes zwischen den Bremskomponenten kleiner als ein Zehnfaches oder Achtfaches oder Fünffaches eines mittleren Durchmessers eines typischen magnetisch polarisierbaren Partikels in dem Bremsspalt.

Das erfindungsgemäße Verfahren nach Anspruch 14 dient zum Bremsen von Relativbewegungen von wenigstens zwei Bremskomponenten einer magnetorheologischen Bremsvorrichtung, wobei zwischen den Bremskomponenten ein Aufnahmeraum mit einem Bremsspalt ausgebildet ist, der ein durch ein Magnetfeld beeinflussbares magnetorheologisches Medium mit magnetorheologischen bzw. polarisierbaren Partikeln enthält. Mit einer elektrischen Spuleneinheit wird ein Magnetfeld in dem Bremsspalt erzeugt, um unter dem Einfluss des Magnetfeldes über wenigstens ein Teil der magnetisch polarisierbaren Partikel in dem Bremsspalt eine Verkantungsstruktur zu bilden und magnetisch polarisierbare Partikel daran miteinander zu verkeilen.

Bei mindestens 25% der verwendeten magnetisch polarisierbaren Partikel (20) beträgt ein Verhältnis von maximalem Durchmesser (22) zu maximaler Quererstreckung senkrecht dazu größer 1,25, wobei diese Partikel als unrunde Partikel vorliegen.

Im Stand der Technik mit dem Wirkprinzip der Scherung wird eine Kettenbildung der Carbonyleisenpartikel in einem Bremsspalt erzeugt. Die Stärke der Kettenbildung hängt von der Stärke des Magnetfeldes ab. Darüber ist die erzeugbare Schubspannung leicht regelbar und direkt beeinflussbar.

Bei der Vorrichtung gemäß der vorliegenden Erfindung wird in dem Bremsspalt bei kleinen Feldstärken ein Bremsmoment erzeugt, so wie bei der Scherung aus dem Stand der Technik. Bei größeren Feldstärken wird eine Klumpenbildung bzw. eine Verkantung der Partikel bewirkt. Dazu ist der Einsatz von Drehkörpern im Bremsspalt aber nicht nötig. Die einzelnen Partikel können aufgrund ihrer unrunden Struktur ineinander eingreifen und miteinander eine Verkantungsstruktur bilden, die (auch ohne Wälzkörper oder dergleichen) hohe uns sehr hohe Bremskräfte erzeugt. Der Übergang zu der Klumpenbildung geht progressiv und hängt nicht direkt und unmittelbar mit der Schubspannung zusammen. Die Feldstärke (eine sehr hohe Feldstärke) ist nach dem derzeitigen Stand der Erkenntnisse ein Auslöser der Klumpenbildung. Die Klumpenbildung bzw. die Verklemmung oder Verkeilung der magnetisch polarisierbaren Partikel miteinander ist ein mechanischer Vorgang und nicht ganz leicht regelbar. Insbesondere wenn "trockene" Partikel mit einem Gas oder Gasgemisch ohne den Einsatz von Öl eingesetzt wird, ist ein besonders niedriges Grundmoment erreichbar, während bei der Auslösung der Klumpenbildung ein hohes statisches Bremsmoment erzeugbar ist.

Werden zusätzlich noch Drehkörper bzw. Walzen eingesetzt, ist dann ein noch einmal (viel) höheres Bremsmoment erzeugbar.

Ein Vorteil geringerer Spalthöhen im Vergleich zum Stand der Technik ist auch, dass eine spürbare Beschleunigung der Reaktionsgeschwindigkeiten bzw. eine spürbare Steigerung des Ansprechverhaltens wahrnehmbar ist. Dies könnte daran liegen, dass eine geringere Anzahl von Partikeln ausgerichtet werden muss, wodurch schneller eine Wirkung erzielt wird. Es hat sich herausgestellt, dass das haptische Gefühl bei der Bedienung verbessert werden kann, da einerseits die Reaktionsgeschwindigkeit erhöht werden kann und andererseits das maximale Bremsmoment bzw. die maximale Bremskraft verstärkt werden kann. Das wird in erheblichem Maße durch die Partikelstruktur ermöglicht. Die Partikel sind derart ausgestaltet, dass sie eine Verkantungsstruktur bilden und miteinander verklemmen können.

Besonders vorteilhaft ist es, wenn im Bremsspalt sehr hohe Flussdichten mit sehr hohen Feldstärken erreicht werden, der Bremsspalt eine geringe Höhe hat und unrunde bzw. unförmige bzw. miteinander verkantbare Partikel und insbesondere Carbonyleisenpartikel in hoher Konzentration verwendet werden. Dann kommt es zu den zuvor genannten Effekten und zu einer Verkantung oder einer Verklumpung der einzelnen Partikel miteinander. Mehrere einzelne Partikel haften dabei quasi aufgrund der Magnetfeldkräfte (rheologische Kettenbildung) zusammen, etwa wie bei einem Klettverschluss. Sie bilden größere Gebilde wie Klumpen, welche wiederum im Bremsspalt zu einer Verklemmung oder Verkeilung mit hohen Tangentialkräften führen. Dieser Effekt benötigt bei passender Auslegung der Magnetfeldstärke bzw. Flussdichte, der Bremsspalthöhe und der Anzahl, Art und Form der Partikel keine mechanische (geometrische) Keilform wie im Stand der Technik oder auch keine spezielle Form des Bremsspaltes. Auch bei zwei zueinander parallelen oder konzentrischen Flächen kommt es zu einer Klumpenbildung mit einem Verkanten, Verkeilen, Verklemmen oder Verstopfen und zu hohen Tangentialkräften, welche wiederum zu hohen Bremsmomenten und Dämpfungskräften führen. Das wird nicht durch die Schubspannungen zwischen den einzelnen frei beweglichen (runden) Partikeln bewirkt, sondern durch das Ineinandergreifen der einzelnen unrunden und unförmigen (nicht sphärischen) Partikel im Bremsspalt.

Magnetfeldkräfte zwischen oder zu den einzelnen Partikeln sind der Auslöser und die daraus sich ergebenden Schubspannungen multiplizieren sich durch das Verklumpen zu hohen Bremskräften bzw. hohen Bremsmomenten.

Dabei ist es von Vorteil, wenn die Spalthöhe des Bremsspaltes geringer ist als im Stand der Technik. Denn je höher die Spalthöhe (relativ zu den Abmessungen der Partikel) ist, desto eher kann es zu einem Aufbrechen oder zu einer Abtrennung der miteinander verketteten Partikel kommen. Das Verhalten ist nicht linear, das heißt, mit zunehmender Spalthöhe nimmt das Bremsmoment überproportional ab.

Deshalb sind kleine Bremsspalthöhen progressiv wirksam. Wenn die Partikel größer werden, kann auch die Spalthöhe entsprechend größer gewählt werden. Wenn die Partikel kleiner werden, ist es sinnvoll, auch die Spalthöhe entsprechend kleiner zu wählen.

Sehr vorteilhaft ist eine sehr hohe und überdurchschnittlich hohe Magnetfeldstärke (Flussdichte) im Bremsspalt. Vorteilhafte Werte liegen weit über den in der Literatur genannten oder bei Scherung notwendigen Werten. Bei der Scherung nach dem Stand der Technik wird meist eine Flussdichte zwischen 50 und 100 Kiloampere/Meter erzeugt, da in diesem Bereich eine lineare Zunahme der Schubspannungen vorliegt. Im Bereich zwischen 150 und 250 Kiloampere/Meter flacht die Kurve stark ab. Höhere (von der Elektrospule zu erzeugende) Flussdichten führen nur zu geringeren Schubspannungszunahmen, sodass das System ineffektiv wird (es geht in Sättigung).

Bei reiner Scherung geben deshalb sehr hohe Flussdichten keinen Sinn bzw. führen nur zu einer geringen und nicht effizienten Zunahme der Schubspannungen und somit des Bremsmomentes. Hohe Flussdichten benötigen entsprechend groß dimensionierte Magnetfeldkreise und starke elektrische Spuleneinheiten. In Summe heißt dies mehr Gewicht, Platzbedarf und Kosten.

Kleine Bremsspalthöhen stellen hohe Anforderungen an die Fertigung und ergeben bei Bremsvorrichtungen nach dem Scherprinzip laut Stand der Technik auch keinen Sinn bzw. führen zu keiner Zunahme der Verspannungen und somit des Bremsmomentes. Deshalb würde man aus dem Stand der Technik heraus nicht eine kleine Bremsspalthöhe mit einer sehr hohen Feldstärke bzw. Flussdichte und unförmigen bzw. unrunden Partikeln kombinieren, da dies vermutlich ein unvorteilhaftes Endprodukt ergeben würde. Aufeinander richtig abgestimmt ergeben sie aber überraschender Weise eine überproportionale Bremswirkung.

Bei einem ringzylindrischen Bremsspalt und vorgegebenen Bauraum ergeben sich bestimmte Querschnitte, durch welche das Magnetfeld fließt. Im Normalfall legt der Fachmann dazu den Magnetkreis so aus, dass es keine magnetfeldtechnischen Einschnürungen bzw. Engstellen gibt. Der Bremsspalt wird mit der Flussdichte nach dem Stand der Technik beaufschlagt. Das führt aber nicht zu der hier beschriebenen Klumpenbildung im Bremsspalt. Höhere Flussdichten im Bremsspalt können aber nicht erzielt werden, weil der Magnetkreis aufgrund der Bauraumvorgabe im Kernbereich in die magnetische Sättigung geht. Deshalb sieht der ringförmige Bremsspalt eine geringere Flussdichte. Zur Erhöhung des Bremsmomentes würde man aber nicht die Scherfläche des Bremsspaltes (Scherfläche = Wirkfläche) reduzieren, da dies gemäß der Literatur zu einer Reduktion des Bremsmomentes führen würde. So ergibt die halbe Scherfläche das halbe Bremsmoment. Es wäre folglich widersinnig, die Scherfläche (Wirkfläche) im Bremsspalt zu reduzieren, da dies proportional die übertragbaren Schubspannungen und damit das Bremsmoment reduzieren würde.

Um optimale Ergebnisse zu erhalten, muss man aber genau dieses machen, um die Klumpenbildung zu erhalten. Durch die Reduktion der Scherfläche im Bremsspalt an der Übergangsfläche vom Festmetall zu dem Carbonyleisenpulver(-partikeln) erhöht man durch die Reduktion der Scherfläche im verbleibenden Wirkspalt die Flussdichte zwischen/in den Carbonyleisenpulver(-partikeln), was wiederum zur Klumpenbildung der einzelnen Partikel führt.

Hat man einen magnetorheologischen Dämpfer mit magnetorheologischer Flüssigkeit, der nach obiger Erfindung ausgelegt ist und befüllt diesen nur mit Carbonyleisenpulver, d.h. man hat statt 40 Volumenprozent Partikel bei magnetorheologischer Flüssigkeit dann bis zu 80 Volumenprozent Partikel (weil die platzeinnehmende Trägerflüssigkeit fehlt), würde man an sich merklich höhere Bremsmomente erwarten. Das Gegenteil ist aber der Fall. Man soll die Übergangs-/Wirkfläche an der Übergangsfläche zum Bremsspalt reduzieren, damit sich die Flußdichte/Feldstärke im verbleibenden Flächenbereich erhöht, was dann aufgrund der höheren Flussdichte zur Verklumpung im Bremsspalt und zu wesentlich höheren Bremsmomenten führt.

Diese Bremsmomente liegen z.B. um den Faktor 4 bis 10 höher als bei der reinen Scherung nach dem Stand der Technik. D.h., dass z.B. eine um die Hälfte reduzierte Scherfläche (Wirkfläche) aufgrund von der dadurch erzeugten Klumpenbildung trotzdem um den Faktor 4 höhere Bremsmomente liefert, obwohl diese laut Literatur merklich sinken müssten, weil zuerst die Scherfläche abnimmt und die Zunahme der Flussdichte/Feldstärke eigentlich aufgrund der abflachenden Schubspannungskurve (mit höherem kA/m) zu wesentlich geringem Momentenzuwachs führen müsste. Tatsächlich kann eine erhebliche Verstärkung erzielt werden.

In allen Ausgestaltungen ist es bevorzugt, dass der Aufnahmeraum zu weniger als 95 Volumenprozent mit magnetorheologischen Partikeln gefüllt ist. Die magnetorheologischen Partikel können insbesondere jeweils überwiegend aus Carbonyleisenpulver bestehen. Die Partikel können eine Beschichtung gegen Korrosion aufweisen. Das magnetorheologische Medium kann eine Graphitbeigabe umfassen.

Insbesondere weisen die magnetisch polarisierbaren Partikel eine Packungsdichte von größer 74 % auf. Für die magnetisch polarisierbaren Partikel sind vorzugsweise Geometrien und/oder Größenverteilungen vorgesehen, welche eine verbesserte Packungsdichte und besonders bevorzugt eine Packungsdichte von größer 74 % ermöglichen.

Insbesondere weist wenigstens ein Teil der magnetisch polarisierten Partikel jeweils wenigstens eine Formschlussstruktur auf. Insbesondere wirken die Formschlussstrukturen der einzelnen Partikel zusammen, sodass sich die Verkantungsstruktur ergibt. Die Formschlussstruktur wird dabei insbesondere durch wenigstens eine der zuvor beschriebenen Geometrieeigenschaften der Partikel bereitgestellt. Insbesondere greifen die Partikel mittels ihrer Formschlussstrukturen formschlüssig ineinander und stellen dadurch die Verkantungsstruktur bereit.

In allen Ausgestaltungen ist es möglich, dass ein Drehmomentsensor oder Drehmomentaufnehmer oder Drehmomentbeobachter oder ein Kraftsensor umfasst ist. Ein solcher Sensor kann, ohne darauf beschränkt zu sein, als Dehnungsmessstreifen ausgeführt sein. Auch der Einsatz einer passiven magnetoelastischen Dehnungsmessung (Magnetostriktion), einer aktiven magnetisch-induktiven Dehnungsmessung (inverse Magnetostriktion) oder einer faseroptischen Dehnungsmessung ist möglich.

Weitere Vorteile und Merkmale der vorliegenden Erfindung, die durch die beiliegenden Ansprüche definiert wird, ergeben sich aus den Ausführungsbeispielen, welche im Folgenden mit Bezug auf die beiliegenden Figuren erläutert werden. Darin zeigen:
- Figur 1: zeigt ein stark schematisches Ausführungsbeispiel einer erfindungsgemäßen Vorrichtung mit einer magnetorheologischen Bremsvorrichtung;
- Figur 2: ein anderes Ausführungsbeispiel einer erfindungsgemäßen Vorrichtung;
- Figuren 3 und 4: schematisierte Darstellungen eines Bremsspaltes einer erfindungsgemäßen Vorrichtung;
- Figur 5: eine stark schematische Darstellung eines magnetisch polarisierbaren Partikels;
- Figur 6: ein weiteres Ausführungsbeispiel einer erfindungsgemäßen Vorrichtung;
- Figur 7: zwei schematische Querschnitte einer weiteren erfindungsgemäßen Vorrichtung;
- Figur 8: die Simulation des Magnetfeldverlaufes in einer Vorrichtung nach Fig. 7;
- Figur 9 und 9a: eine Rasterelektronen-Mikroskopaufnahme von konventionellen magnetorheologischen Partikeln; und
- Figur 10und 10a: eine Rasterelektronen-Mikroskopaufnahme von magnetorheologischen Partikeln für die anmeldungsgemäße Bremsvorrichtung.

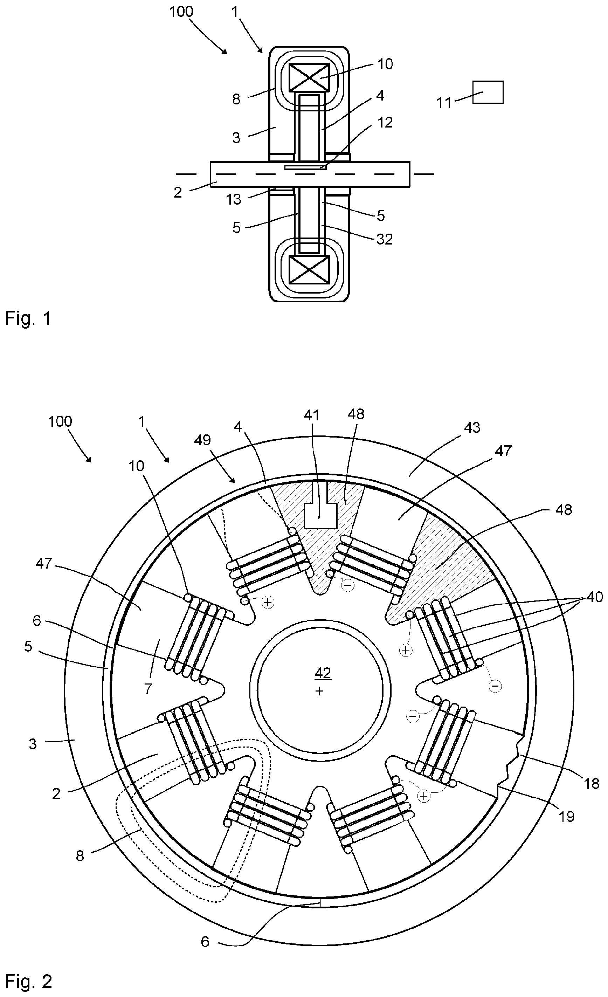

Figur 1 zeigt eine stark schematisierte geschnittene Darstellung einer erfindungsgemäßen Vorrichtung 100, die eine Bremsvorrichtung 1 umfasst oder als eine solche ausgebildet ist. Die Bremsvorrichtung 1 umfasst eine innere Bremskomponente 2, die als Innenkomponente 2a ausgeführt ist und eine diese umgebende äußere Bremskomponente 3, die als Außenkomponente 3a ausgeführt ist. Mit der Bremskomponente 2 ist hier eine Bremsscheibe 32 fest verbunden. Die Bremskomponente 3 umgibt die Bremsscheibe 32 und bildet zwischen der Bremsscheibe 32 und der Bremskomponente 3 einen Aufnahmeraum 4 aus, der mit einem magnetorheologischen Medium 9 mit magnetorheologischen Partikeln 20 versehen ist. Zwischen der Bremsscheibe 32 und der Bremskomponente 3 ist ein Bremsspalt 5 auf jeder Seite der Scheibe 32 und radial außen ausgebildet. Die Bremskomponente 3 bildet ein Gehäuse.

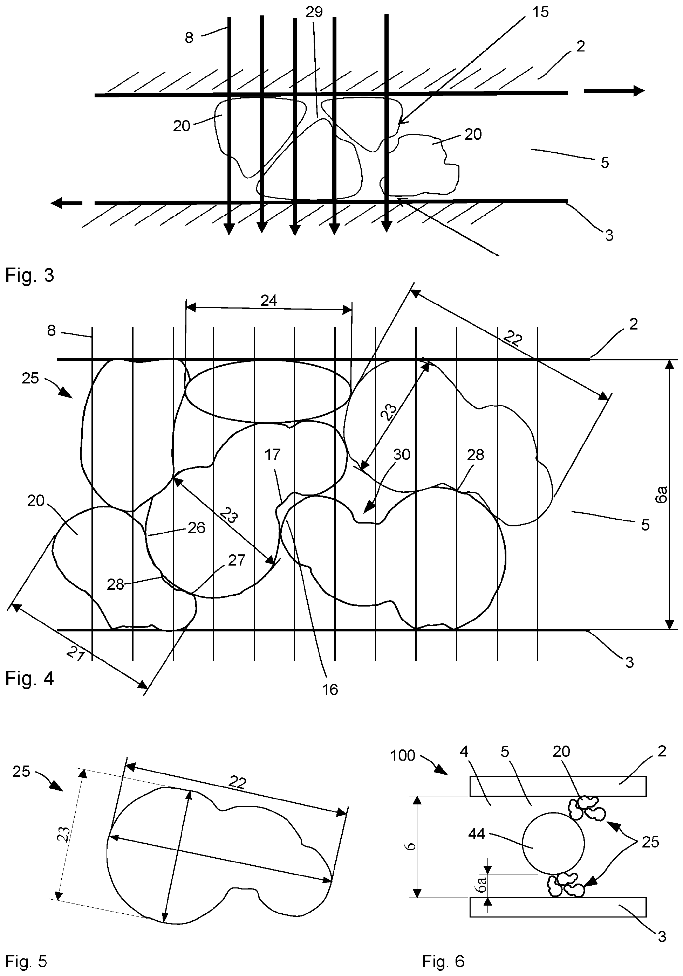

Die Magnetfeldlinien 8, die durch die elektrische Spuleneinheit 10 erzeugt werden, treten durch die seitlichen Bremsspalte 5 hindurch und bewirken - je nach magnetischer Flussdichte - eine Verkettung oder eine Verklumpung oder Verkantungen der einzelnen magnetorheologischen Partikel 20 miteinander (vergleiche die Figuren 3 und 4).

Eine Steuereinheit 11 dient zur Steuerung der elektrischen Spuleneinheit 10 und somit der Stärke des Magnetfeldes 8. Ein Belastungssensor 12 und ein Positionssensor 13 dienen zur Erfassung der Relativposition der beiden Bremskomponenten zueinander und zur Erfassung des erzeugten Bremsmomentes.

In allen Ausführungsbeispielen werden vorzugsweise ferromagnetische und/oder ferrimagnetische und/oder superparamagnetische Partikel und vorzugsweise wenigstens Partikel aus Carbonyleisenpulver vorgesehen. Besonders vorteilhaft kann ein magnetorheologisches Medium eingesetzt werden, welches aus Carbonyleisenpulver in Umgebungsluft bereitgestellt wird. Dazu können noch Hilfsstoffe kommen, welche insbesondere die Schmierung verbessern. Die Partikel können z. B. eine Verteilung der Partikelgröße zwischen einem und insbesondere zwischen fünf oder zehn und zwanzig Mikrometern aufweisen. Möglich sind auch kleinere (< 1 Mikrometer) bis sehr kleine (wenige Nanometer) oder auch größere Partikel von dreißig, vierzig und fünfzig Mikrometer oder sogar noch größer.

Zwischen den Bremskomponenten 2 und 3 sind Bremsspalte 5 vorgesehen, die über eine Spalthöhe verfügt und hier mit einem Medium gefüllt ist. Das Medium kann auch ein magnetorheologisches Fluid sein, welches beispielsweise als Trägerflüssigkeit ein Öl umfasst, in dem ferromagnetische (magnetorheologische) Partikel 20 vorhanden sind. Glykol, Fett, Silikon, Wasser, Wachs und dickflüssige oder dünnflüssige Stoffe können auch als Trägermedium verwendet werden, ohne darauf beschränkt zu sein.

Das Trägermedium ist aber insbesondere und besonders bevorzugt auch gasförmig und/oder kann ein Gasgemisch sein (z. B. Luft bzw. Umgebungsluft, Stickstoff, Gas oder Gasgemisch, Luftgemisch) bzw. es kann auf das Trägermedium verzichtet werden (Vakuum oder Luft und z. B. Umgebungsluft). In diesem Fall werden lediglich durch das Magnetfeld beeinflussbare Partikel (z. B. Carbonyleisen) in den Bremsspalt bzw. Wirkspalt gefüllt. Eine Vermischung mit anderen - vorzugsweise mit schmierenden Eigenschaften, ohne darauf beschränkt zu sein, - Partikeln wie Graphit, Molybdän, Kunststoffpartikeln, polymere Materialien sind möglich. Es kann auch eine Kombination aus den genannten Materialien sein (z.B. Carbonyleisenpulver vermischt mit Graphit und Luft als Trägermedium). Als Carbonyleisenpulver ohne (flüssiges) Trägermedium kann zum Beispiel ein Pulver verwendet werden, welches einen Mindestanteil an Eisen von 97% umfasst. möglich ist z. B. eine SiO2-Beschichtung.

Die ferromagnetischen oder ferrimagnetischen Partikel 20 sind vorzugsweise Carbonyleisenpulver. Die Partikel können auch eine spezielle Beschichtung/Mantel (Titanbeschichtung, Keramik-, Karbonmantel, polymere Beschichtung etc.) aufweisen, damit sie die je nach Anwendungsfall auftretenden hohen Druckbelastungen besser aushalten bzw. stabilisiert sind. Die Partikel können auch eine Beschichtung gegen Korrosion oder elektrische Leitung haben. Die magnetorheologischen Partikel können für diesen Anwendungsfall nicht nur aus Carbonyleisenpulver (Reineisen; Eisenpentacarbonyl), sondern z. B. auch aus speziellem Eisen (härterem Stahl) oder anderen speziellen Materialien (Magnetit, Cobalt...), oder einer Kombination daraus, hergestellt werden. Superparamagnetische Partikel mit geringer Hysterese sind auch möglich und vorteilhaft.

Figur 2 zeigt eine alternative Ausführungsform, bei der ein ringzylindrischer Bremsspalt 5 zwischen den beiden Bremskomponenten 2 und 3 ausgebildet ist. An der Achseinheit 42 ist ein Kern 7 ausgebildet, der hier eine Mehrzahl von radial nach außen abstehenden Armen 47 umfasst. Die Arme 47 können fingerartig ausgebildet sein oder sich in Form von Rippen erheblich in die Tiefe erstrecken, sodass die Länge senkrecht zu Blattebene auch größer als der Durchmesser in der Blattebene sein kann. Grundsätzlich ist es mit (angepassten Abwandlungen) der Bremsvorrichtung 1 nach Figur 2 sowohl möglich, Linearbewegungen senkrecht zur Blattebene als auch Drehbewegungen abzubremsen oder zu dämpfen.

Jeder einzelne Arm 47 weist hier mehrere Wicklungen einer elektrischen Spuleneinheit 10 auf, um ein entsprechendes Magnetfeld zu erzeugen. Das Magnetfeld 8 tritt jeweils im Wesentlichen radial durch den Bremsspalt 5 hindurch und verläuft in der äußeren Bremskomponente 3, die als Rotoreinheit 43 ausgebildet sein kann, in Umfangsrichtung bis zum nächsten Arm 47, und tritt dort wieder im Wesentlichen radial durch den Bremsspalt 5 hindurch.

Zwischen den einzelnen Armen 47 sind hier Zwischenabschnitte 48 vorgesehen oder ausgebildet, die insbesondere mit einem Material mit einer erheblich geringeren magnetischen Permeabilität gefüllt sind als die magnetische Permeabilität der Arme 47. Das Verhältnis der relativen magnetischen Permeabilität des Armes 47 zur relativen magnetischen Permeabilität des Zwischenabschnittes 48 ist vorzugsweise größer 10 und insbesondere größer 100 und besonders bevorzugt größer 1000 und kann Werte von 10.000 oder 100.000 erreichen oder überschreiten.

Wenn eine magnetorheologische Flüssigkeit mit einem Trägermaterial wie einem Öl oder dergleichen eingesetzt wird, kann ein Ausgleichsbehälter 41 vorgesehen sein. Werden "trockene" Partikel 20 mit einem Gas oder Gasgemisch als magnetorheologisches Medium 9 eingesetzt, kann auf einen Ausgleichsbehälter (Temperaturausgleich, Leckageausgleich etc.) verzichtet werden.

Das radial äußere Ende eines Armes 47 kann sich verjüngen, um eine größere Konzentration der Feldstärke in dem Bremsspalt zu erzeugen, vgl. die Verengung 49 oben in der Darstellung von Figur 2. Möglich ist es auch, dass das radial äußere Ende eines Armes oder mehrerer Arme 47 eine Sternkontur oder eine Wellenform aufweist, wie im rechten unteren Bereich dargestellt, um über der Fläche des Arms noch eine gewisse Verstärkung in bestimmten Abschnitten zu erzielen. Dort sind Erhöhungen 18 und Vertiefungen 19 eingezeichnet. Entsprechende Konturen im Gehäuse, welche die Wirkflächen reduzieren und damit die Feldstärke in den Übergangsbereichen erhöhen, sind alternativ oder zusätzlich auch möglich.

Figur 3 zeigt eine stark schematische Schnittdarstellung durch den Bremsspalt einer Bremsvorrichtung 1. In die Bremskomponente 2 und die Bremskomponente 3 sind schematisch Magnetfeldlinien 8 eingezeichnet, die den Bremsspalt 54 senkrecht durchtreten.

In dem Bremsspalt 5 sind schematisch hier vier magnetorheologische Partikel 20 eingezeichnet, die unrund ausgebildet sind und somit insgesamt eine effektive Verkantungsstruktur 15 bilden können. Beispielhaft angezogen ist eine Kante 29 an einem der magnetorheologischen Partikel 20. Es zeigt sich, dass durch die Art und durch die Struktur der magnetorheologischen Partikel 20 eine effektive Verklemmung der einzelnen Partikel untereinander und der beiden Bremskomponenten 2 und 3 relativ zueinander ermöglicht wird.

Bei Carbonyleisenpulver nach dem Stand der Technik sprechen wir von vorzugsweise < 1 mm Bremsspalthöhe 5, besonders bevorzugt etwa 0,1 mm bei z.B. einem Aktordurchmesser von < 40 mm.

Hier wird ein eine kleinere Spalthöhe bevorzugt. Werden größere Partikel verwendet, kann auch die Wirkspaltdicke/-höhe größer werden. Werden kleinere Partikel eingesetzt, muss auch Wirkspaltdicke/-höhe kleiner gewählt werden.

Figur 4 zeigt eine weitere schematische geschnittene Querschnittsansicht einer Bremsvorrichtung 1, in der eine Anzahl von unförmigen magnetorheologischen Partikeln 20 eingezeichnet ist. Der Bremsspalt erstreckt sich zwischen den beiden Bremskomponenten 2 und 3. In dem Wirkspalt bzw. Bremsspalt 5 sind mehrere Partikel 20 schematisch eingezeichnet. Das oben rechts eingezeichnete Partikel weist einen maximalen Durchmesser 22 auf, der erheblich größer ist als die maximale Quererstreckung 23 senkrecht dazu. Einige der Partikel weisen Muldenabschnitte 28, Vorsprünge 16 oder Rücksprünge 17 auf, in die andere Abschnitte anderer Partikel eingreifen können. Dadurch wird insgesamt eine effektive Verkantungsstruktur gebildet, wenn die Partikel ineinander eingreifen. Zwischen den eingezeichneten Partikeln können sich noch kleinere Partikel befinden. Diese können auch sphärisch sein. Das Verklemmen und Verkeilen der einzelnen Partikel wird durch eine hohe magnetische Feldstärke in dem Bremsspalt 5 begünstigt, wodurch die Partikel auch aneinander angezogen werden, was die Klumpenbildung verstärkt. Der mittlere Durchmesser 21, gemittelt über alle Partikel, oder der typische Durchmesser 24 der Partikel 20 kann sich von dem maximalen Durchmesser und der maximalen Quererstreckung 23 unterscheiden. Eine große Oberfläche der Partikel pro Volumen ist von Vorteil. So sind z.B. eher flache Partikel vorteilhaft. Die Oberfläche als solche kann auch rau und/oder gewellt ausgebildet sein.

Es hat sich herausgestellt, dass eine relativ geringe minimale Spalthöhe 6a zur Erhöhung des Bremsmomentes förderlich ist, während ein zu großer Abstand der beiden Bremskomponenten 2 und 3 zu einer Verringerung des erzielbaren Bremsmomentes führt. Die minimale Spalthöhe 6a kann bei einer unglatten Oberfläche einer oder beider Bremskomponenten durch Erhöhungen oder Vertiefungen entsprechend reduziert werden.

Figur 5 zeigt eine schematische Darstellung eines einzelnen Partikels 20, das als unrundes Partikel 25 ausgebildet ist. Das Verhältnis von maximalem Durchmesser 22 zu maximaler Quererstreckung senkrecht dazu beträgt hier mehr als 1,25 und kann Werte von 1,5 oder 2 erreichen und übersteigen.

Figur 6 zeigt eine stark schematische Darstellung einer Vorrichtung 100 mit einer Bremsvorrichtung 1, wobei in dem Bremsspalt 5 Drehkörper 44 in Form von Walzen oder dergleichen vorgesehen sind. Dadurch ist die minimale Spalthöhe 6a des Bremsspaltes 5 erheblich kleiner als die Spalthöhe 6 zwischen den Bremskomponenten 2 und 3. Auch in diesem Ausführungsbeispiel werden unförmige und unrunde Partikel 25 eingesetzt, die zu einer Verklumpung und zu Verkantungen der einzelnen Partikel 20 führen, sodass ein besonders hohes Bremsmoment erzielbar ist.

Die magnetisch polarisierbaren Partikel aus z. B. den Figuren 3 bis 6 verkanten insbesondere dreidimensional. Die mit den Partikeln in Kontakt stehenden Wirkflächen der Bremskomponenten 2 und/oder 3 können auch eine entsprechende Oberfläche und/oder Oberflächenbeschaffenheit haben, welche das Verkanten mit den Partikeln fördern. So können diese Mulden, Rändel, Pyramiden, Ein- und Ausbuchtungen, Ecken, Dimpels und dergleichen mehr aufweisen. Die Oberflächen können rau und auch unregelmäßig ausgebildet sein. Vorzugsweise ist eine Höhendifferenz von "tiefstem" zu "höchstem" Punkt einer Oberfläche größer als 1% oder 5% der Spalthöhe in dem Bremsspalt 5 und/oder größer als 5% oder 10% des Durchmessers eines Partikels.

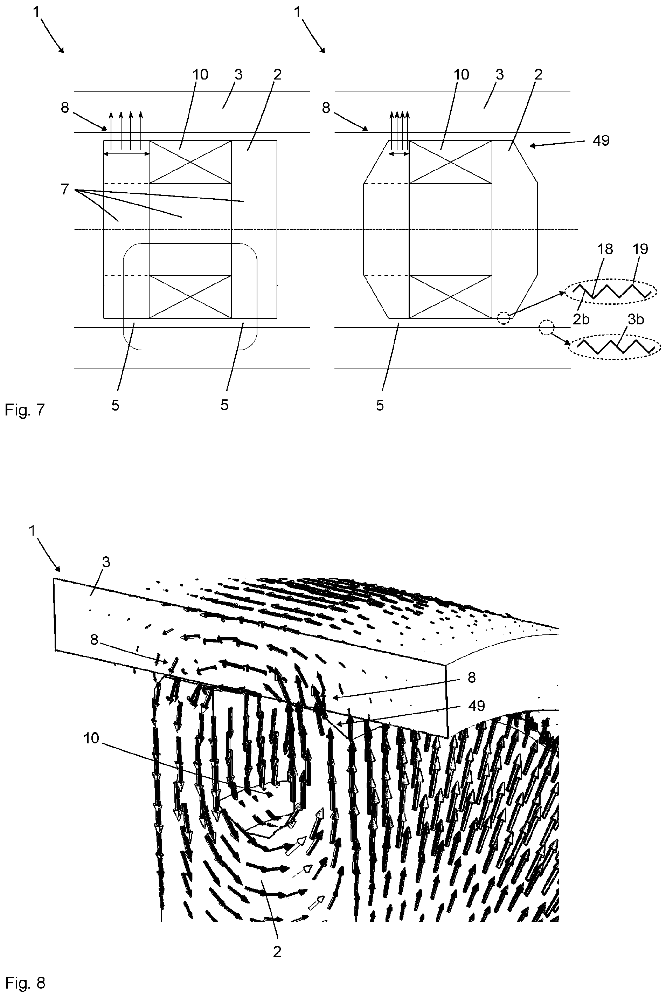

Figur 7 zeigt zwei schematische Querschnitte von Bremsvorrichtungen 1 mit jeweils zwei Bremskomponenten 2, 3, wobei zwischen den Oberflächen 2b, 3b ein Bremsspalt 5 ausgebildet ist. Eine elektrische Spuleneinheit 10 ist um einen Kern 7 gewickelt, der einstückig ausgebildet sein kann oder aus mehreren Teilen besteht. In der rechten Darstellung von Figur 7 ist der Kern im radial äußeren Bereich verjüngt und weist so eine radial äußere Verengung 49 auf. Dadurch werden die Magnetfeldlinien des Magnetfeldes 8 konzentriert und verlaufen "enger" als in der linken Darstellung von Figur 7, bei der der Kern 7 keine Verengung 49 bzw. Verjüngung am radial äußeren Ende aufweist.

Rechts neben Figur 7 sind vergrößert mögliche Ausgestaltungen der (äußeren) Oberfläche 2b der Bremskomponente 2a und der (inneren) Oberfläche der Bremskomponente 3 schematisch dargestellt. Dabei können Erhöhungen 18 und Vertiefungen 19 regelmäßig oder unregelmäßig an den Oberflächen 2b und 3b ausgebildet sein, um eine Verkantung der Partikel mit den Bremskomponenten zu begünstigen und zu verstärken. Dadurch wird die Verkantungsstruktur effektiv verstärkt.

Durch eine in Fig. 7 dargestellte Veränderung der Geometrie am Wirkspalt kann das Magnetfeld 8 gezielt an gewissen Stellen verstärkt werden und so an anderen abgeschwächt werden. In der Figur 7 ist das schematisch gezeigt. In rotationssymetrischen Dämpfern nimmt das Magnetfeld automatisch radial ab, da mehr Fläche vom Magnetfeld durchströmt werden muss. Der Wirkspalt, der einen größeren Radius aufweist, wie der Kern, um den die elektrische Spuleneinheit gewickelt wird, hat deshalb eine geringere Feldstärke als im Kern 7, auch wenn die Durchmesser axial gleich groß sind, wie im Kern 7. Eine Erhöhung des Stromes in der Spuleneinheit würde ab einer gewissen Feldstärke nichts mehr nützen, da der Kern 7 in magnetische Sättigung gerät.

Für die erfindungsgemäß beschriebenen Effekte ist aber ein hohes magnetisches Feld notwendig. Deshalb kann die Wirkfläche am Bremsspalt verringert werden, um das Magnetfeld 8 zu erhöhen. So verliert man zwar Scherfläche, aber man erhält gleichzeitig ein größeres Magnetfeld.

Die Figur 8 zeigt schematisch eine Magnetfeldsimulation für zwei verschiedene Geometrien, wobei die zentral vorgesehene Spuleneinheit 10 nicht eingezeichnet ist. Man erkennt, dass bei schmalerer Wirkfläche das Magnetfeld stärker ist (dichtere und längere Vektoren = höheres Magnetfeld, weiter voneinander entfernte und kürzere Vektoren = niedriges Magnetfeld). Am rechten und linken Ende des Kerns 7 sind unterschiedliche Verengungen 49 (unterschiedliche Winkel) am radial äußeren Ende des Kerns 7 ausgebildet. Der verbleibende Steg am Bremsspalt ist deshalb rechts und links unterschiedlich breit. Am rechten Ende ist der verbleibende Steg schmaler, sodass eine lokal stärkeres Magnetfeld den Bremsspalt 5 durchtritt. Die Scherfläche ist schmaler, aber die Magnetfeldstärke deutlich höher, sodass eine Verkantung der Partikel erfolgen kann.

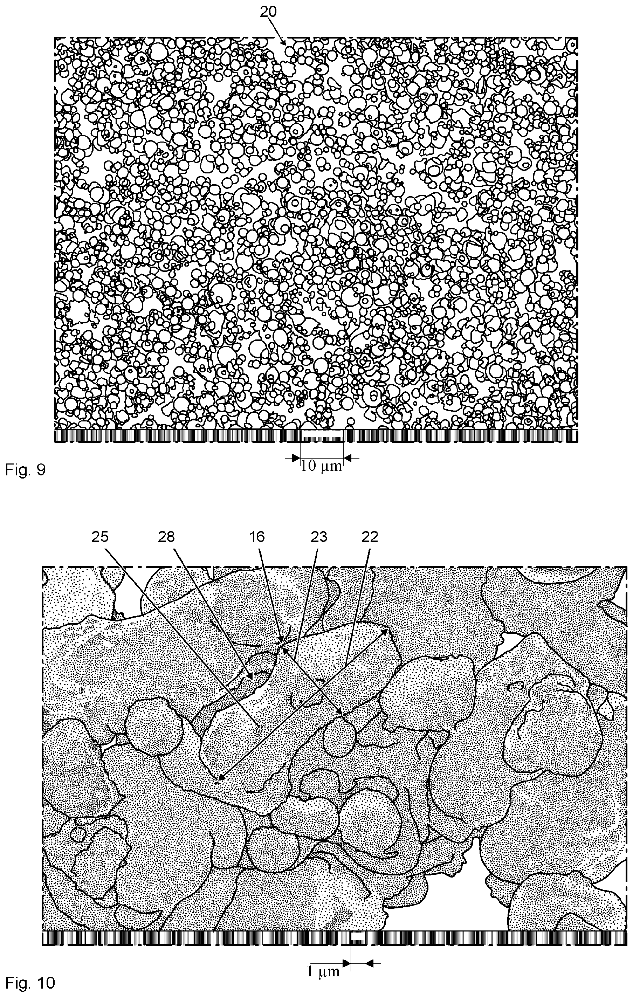

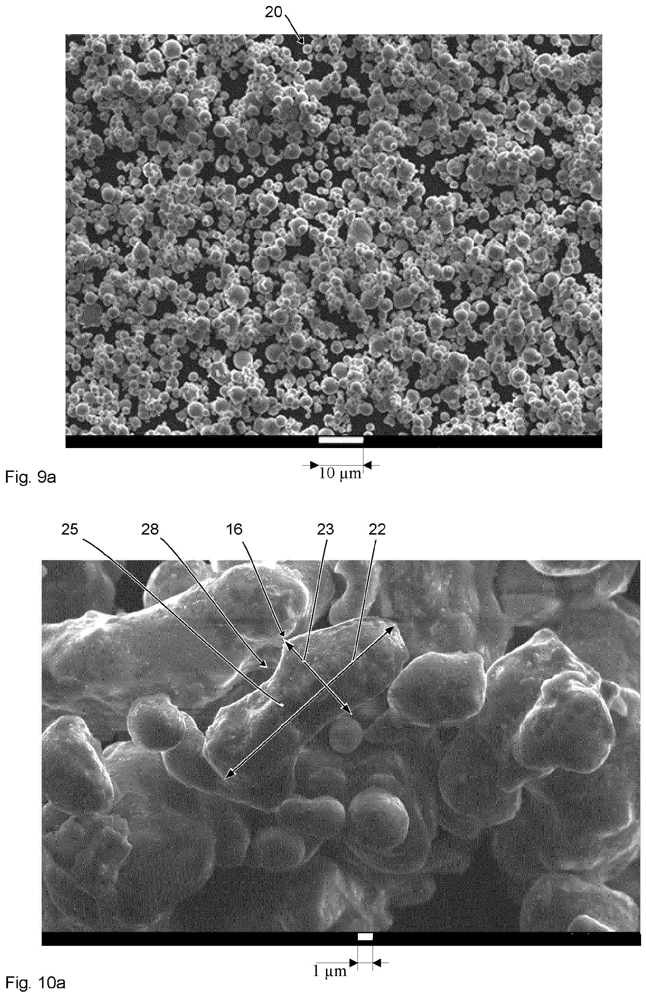

Figuren 9 und 9a zeigen eine Rasterelektronenmikroskopaufnahme als Strichzeichnung und als Aufnahme eines herkömmlichen magnetorheologischen Fluides, wobei die rund ausgebildeten Partikel 20 gut erkennbar sind. Am Rand sind der Maßstab und ein Streckenabschnitt von 10 µm dargestellt.

Im Unterschied zu den Partikeln nach Figur 9 werden erfindungsgemäß zu einem wesentlichen Anteil unrunde Partikel 25 nach Figur 10 (als Strichzeichnung) bzw. Figur 10a (als Aufnahme) erfindungsgemäß eingesetzt. In der Darstellung gemäß Figuren 10 (und 10a) ist direkt erkennbar, dass ein erheblicher Anteil der oder die überwiegende Anzahl der Partikel 20 unrund und unförmig ausgestaltet ist. Bei dem zentral dargestellten Partikel 20 ist der maximale Durchmesser 22 mehr als doppelt so groß wie die maximale Quererstreckung 23 desselben Partikels 20 senkrecht dazu.

Figuren 9 und 9a zeigen dabei im Prinzip den gleichen Ausschnitt. Ebenso zeigen Figuren 10 und 10a zeigen dabei im Prinzip das gleiche Detail.

An den Partikeln 20 sind sowohl Vorsprünge 16 als auch Muldenabschnitte 28 ausgebildet. Durch eine entsprechende Anzahl derart ausgestalteter Partikel 20 wird eine effektive Verkantungsstruktur 15 in dem Bremsspalt 5 ermöglicht. Auch wenn der Maßstab gemäß Figur 8 (vergleiche den eingezeichneten 1 µm-Abstand) erheblich größer ist als der Maßstab nach Figur 7, ist klar, dass die Struktur der Partikel 20 in Figur 8 erheblich anders als in Figur 7 ist. Dadurch wird eine erheblich bessere Verklemmung der einzelnen Partikel 20 untereinander und somit der Bremskomponenten 2 und 3 erreicht.

Partikel nach Figur 9 (9a) können mit Partikeln nach den Figuren 3 bis 6 oder/und 10 (10a) gemischt werden und so das magnetorheologische Medium ergeben. Vorzugsweise beträgt der Anteil unrunder Partikel wenigstens 30% oder 40% oder 50% oder mehr.

Die magnetische Anziehungskraft zwischen Partikeln ist abhängig von dem Volumen und von der Oberfläche. Kugeln haben bei gegebenem Volumen die kleinste Oberfläche. Da die magnetische Anziehungskraft proportional zur (berührenden) Oberfläche ist, ist die Kraft zwischen zwei kugelförmigen bzw. sphärischen Partikeln geringer als für anders geformte (nicht-sphärische) Partikel mit gleichem Volumen, z. B. für Würfel oder die hier beschriebenen Partikelformen. Größere Partikel ziehen sich deshalb auch mit größerer Kraft an, da die Flussdichte mit größerem Volumen erhöht wird.

Sphärische bzw. kugelförmige Partikel mit gleichem Durchmesser haben eine maximale Packungsdichte, die nicht überschritten werden kann. Diese beträgt etwa 74%. Anders geformte (nicht-sphärische) Partikel können dichter gepackt werden. Dadurch kann der Leerraum bzw. das Luftvolumen im Spalt verringert werden. Der magnetische Widerstand im Spalt verkleinert sich und der Magnetkreis wird effizienter. Der magnetische Fluss wird dann bei gleichem Bauraum erhöht, was vor allem bei kleinem Bauvolumen vorteilhaft ist. Die Partikel verstärken dann selbst das Feld, das sie benötigen, um die Verkantungsstruktur zu bilden.

Insbesondere auch bei Einsatz eines magnetorheologischen Mediums, bei dem als Trägermaterial ein Gas oder Gasgemisch und keine flüssigen Bestandteile eingesetzt werden, kann ein besonders geringes Grundmoment erreicht werden, während andererseits ein besonders hohes maximales Bremsmoment erzielbar ist. Ein besonders hohes Bremsmoment wird bei hohen Flussdichten im Bremsspalt und einer relativ geringem minimale Spalthöhe 6a und bei unrunden Partikeln 20 erzielt.

Bei glatten oder runden bzw. sphärischen Partikeln ist ein entsprechend starkes Magnetfeld notwendig, damit die Partikel so stark aneinander haften bzw. reiben, dass der gewünschte Bremseffekt auftritt. Ist das Magnetfeld nicht ausreichend, gleiten die Partikel aneinander entlang. Bei der Erfindung bildet sich zwischen den einzelnen Partikeln 20 auch bei schwächeren magnetischen Einflüssen die Verkantungsstruktur aus, sodass sie sich z. B. formschlüssig verklemmen und nicht aneinander entlang gleiten können. So kann bei Bedarf besonders stark gebremst werden. Zudem haben die Partikel aufgrund ihrer hier beschriebenen Eigenschaften den Vorteil, dass sie zugleich auch ein besonders geringes Grundmoment ermöglichen. Dadurch lassen sich die Bremskomponenten besonders leicht relativ zueinander drehen, wenn kein Magnetfeld erzeugt wird.

**Bezugszeichenliste:**

| | | | |
|---|---|---|---|
| 1 | Bremsvorrichtung | 29 | Kante |
| 2 | Bremskomponente (innere) | 30 | gewinkelter |
| 2a | Innenkomponente | | Strukturabschnitt |
| 2b | Oberfläche | 32 | Bremsscheibe |
| 3 | Bremskomponente (äußere) | 40 | Wicklung |
| 3a | Außenkomponente | 41 | Ausgleichsbehälter |
| 3b | Oberfläche | 42 | Achseinheit |
| 4 | Aufnahmeraum | 43 | Rotoreinheit |
| 5 | Bremsspalt | 44 | Drehkörper |
| 6 | Spalthöhe | 45 | Spaltabschnitt |
| 6a | minimale Spalthöhe | 46 | variable Spalthöhe |
| 7 | Kern | 47 | Arm |
| 8 | Magnetfeld | 48 | Zwischenabschnitt |
| 9 | magnetorheologisches | 49 | Verengung |
| | Medium | 50 | Konsole |
| 10 | Spuleneinheit | 59 | Befestigungseinrichtung |
| 11 | Steuereinheit | 100 | Vorrichtung |
| 12 | Belastungssensor | 101 | Bedienelement |
| 13 | Positionssensor (Weg, Winkel) | 102 | Außendurchmesser |
| | | 103 | Bedienwalze |
| 14 | Magnetfeldsensor | 103 | Bedienknopf |
| 15 | Verkantungsstruktur | | |
| 16 | Vorsprung | | |
| 17 | Rücksprung | | |
| 18 | Erhöhung | | |
| 19 | Vertiefung | | |
| 20 | Partikel | | |
| 21 | mittlerer Durchmesser | | |
| 22 | maximaler Durchmesser | | |
| 23 | maximale Quererstreckung senkrecht zu 22 | | |
| 24 | typischer Durchmesser | | |
| 25 | unrunde Partikel | | |
| 26 | Stelle | | |
| 27 | Stelle | | |
| 28 | Muldenabschnitt | | |

## Patentansprüche

1. Vorrichtung (100) mit einer magnetorheologischen Bremsvorrichtung (1) zum Bremsen von Relativbewegungen umfassend wenigstens zwei Bremskomponenten (2, 3), wobei zwischen den Bremskomponenten (2, 3) ein Aufnahmeraum (4) mit einem Bremsspalt (5) ausgebildet ist, der ein durch ein Magnetfeld beeinflussbares magnetorheologisches Medium (9) mit magnetisch polarisierbaren Partikeln (20) enthält, wobei wenigstens ein Kern und wenigstens eine elektrische Spuleneinheit (24) umfasst ist, um ein steuerbares Magnetfeld (8) in dem Bremsspalt (5) zu erzeugen, wobei wenigstens ein Teil der magnetisch polarisierbaren Partikel (20) dazu ausgebildet ist, unter dem Einfluss des Magnetfeldes (8) eine Verkantungsstruktur (15) zu bilden und miteinander zu verklemmen, **dadurch gekennzeichnet, dass** bei mindestens 25% der magnetisch polarisierbaren Partikel (20) ein Verhältnis von maximalem Durchmesser (22) zu maximaler Quererstreckung (23) senkrecht dazu größer 1,25 beträgt, die als unrunde Partikel (20a) vorliegen.

2. Vorrichtung (100) nach Anspruch 1, wobei die magnetisch polarisierbaren Partikel (20) unrunde Partikel (20a) umfassen, bei denen ein Verhältnis von größtem /maximalem Durchmesser (22) zu größter /maximaler Quererstreckung (23) senkrecht dazu größer 1,5 beträgt.

3. Vorrichtung (100) nach einem der vorhergehenden Ansprüche, wobei wenigstens ein Teil der magnetisch polarisierbaren Partikel (20) dazu ausgebildet ist, sich unter dem Einfluss des Magnetfeldes (8) an zwei oder mehr voneinander beabstandeten Stellen (26, 27) miteinander zu verklemmen und/oder wobei wenigstens ein Teil der magnetisch polarisierbaren Partikel (20) wenigstens einen Muldenabschnitt (28) aufweist
und/oder wobei wenigstens ein Teil der magnetisch polarisierbaren Partikel (20) einen gewinkelten Strukturabschnitt (30) aufweist.

4. Vorrichtung (100) nach einem der vorhergehenden Ansprüche, wobei ein Vorsprung oder eine Kante eines Partikels mit einem Rücksprung oder einem Muldenabschnitt eines anderen Partikels verklemmt
und/oder wobei wenigstens eine an den Bremsspalt (5) angrenzende Oberfläche wenigstens einer Bremskomponente (2, 3) wenigstens abschnittsweise unglatt ausgebildet ist und Erhöhungen (18) und/oder Vertiefungen (19) aufweist, um eine Verkantung mit den Partikeln (20) zu verstärken.

5. Vorrichtung (100) nach einem der vorhergehenden Ansprüche, wobei eine minimale Spalthöhe (6a) des Bremsspaltes (6) zwischen den Bremskomponenten (2, 3) größer ist als das Doppelte der maximalen Quererstreckung (23) senkrecht zu dem maximalen Durchmesser (22) der magnetisch polarisierbaren Partikel (20) in dem Bremsspalt (6).

6. Vorrichtung (100) nach einem der vorhergehenden Ansprüche, wobei bei mindestens 50% der magnetisch polarisierbaren Partikel (20) ein Verhältnis von maximalem Durchmesser (22) zu maximaler Quererstreckung (23) senkrecht dazu größer 1,25 beträgt
und/oder wobei mindestens 25% der magnetisch polarisierbaren Partikel (20) einen maximalen Durchmesser (22) und/oder
eine maximale Quererstreckung (23) von wenigstens 10 µm oder von wenigstens 20 µm aufweisen
und/oder wobei mindestens 25% der magnetisch polarisierbaren Partikel (20) einen maximalen Durchmesser (22) von wenigstens 30 µm oder 50 µm aufweisen.

7. Vorrichtung (100) nach einem der vorhergehenden Ansprüche, wobei die beiden Bremskomponenten (2, 3) relativ zueinander verschwenkbar sind und/oder relativ zueinander kontinuierlich drehbar sind.

8. Vorrichtung (100) nach einem der vorhergehenden Ansprüche, wobei die elektrische Spuleneinheit (10) radial oder axial um den Kern (7) gewickelt ist.

9. Vorrichtung (100) nach einem der vorhergehenden Ansprüche, wobei der Bremsspalt (5) die Innenkomponente (2a) vollständig umgibt und wobei der Bremsspalt (5) insbesondere als umlaufender Ringspalt ausgebildet ist.

10. Vorrichtung (100) nach einem der vorhergehenden Ansprüche, wobei an wenigstens einer Bremskomponente (2, 3) eine zu der jeweils anderen Bremskomponente hin ragende Sternkontur (47) ausgebildet ist, welche eine über dem Umfang oder der Länge des Bremsspaltes (5) variable Spalthöhe (46) erzeugt/zur Verfügung stellt.

11. Vorrichtung (100) nach einem der vorhergehenden Ansprüche, wobei in einem Spaltabschnitt (45) des Bremsspaltes wenigstens ein Drehkörper (44) angeordnet ist.

12. Vorrichtung (100) nach einem der vorhergehenden Ansprüche, wobei das magnetorheologische Medium (9) wenigstens eine Flüssigkeit als Trägermedium umfasst, in der die magnetisch polarisierbaren Partikel (20) aufgenommen sind, wobei die magnetisch polarisierbaren Partikel (20) insbesondere zwischen 25 und 50 Volumenprozent in dem Aufnahmeraum (4) ausmachen
oder wobei das magnetorheologische Medium (9) wenigstens ein Gas als die magnetisch polarisierbaren Partikel (20) umgebendes Trägermedium umfasst, wobei die magnetisch polarisierbaren Partikel (20) insbesondere zwischen 40 und 90 Volumenprozent in dem Aufnahmeraum (4) ausmachen.

13. Vorrichtung (100) nach einem der vorhergehenden Ansprüche, umfassend ein mit der magnetorheologischen Bremsvorrichtung (1) verbundenes Bedienelement (101) und wobei das Bedienelement (100) eine Bedienwalze (103) und/oder einen Bedienknopf (104) umfasst und wobei die magnetorheologischen Bremsvorrichtung (1) wenigstens teilweise im Inneren des Bedienelements (101) aufgenommen ist.

14. Verfahren (100) zum Bremsen von Relativbewegungen von wenigstens zwei Bremskomponenten (2, 3) einer magnetorheologischen Bremsvorrichtung (1), wobei zwischen den Bremskomponenten (2, 3) ein Aufnahmeraum (4) mit einem Bremsspalt (5) ausgebildet ist und ein durch ein Magnetfeld beeinflussbares magnetorheologisches Medium (9) mit magnetisch polarisierbaren Partikeln (20) enthält, wobei mit einer elektrischen Spuleneinheit (24) ein Magnetfeld (8) in dem Bremsspalt (5) erzeugt wird, um unter dem Einfluss des Magnetfeldes (8) über wenigstens einen Teil der magnetisch polarisierbaren Partikel (20) in dem Bremsspalt eine Verkantungsstruktur (15) zu bilden und magnetisch polarisierbare Partikel (20) daran miteinander zu verkeilen, und dass bei mindestens 25% der verwendeten magnetisch polarisierbaren Partikel (20) ein Verhältnis von maximalem Durchmesser (22) zu maximaler Quererstreckung (23) senkrecht dazu größer 1,25 beträgt, die als unrunde Partikel (20a) vorliegen.

15. Verfahren nach dem vorhergehenden Anspruch, wobei die magnetische Feldstärke zwischen den einzelnen Partikeln größer als 500 kA/m ist und wobei die Partikelkonzentration im Bremsspalt größer als 40% ist.

## Claims

1. An apparatus (100) with a magnetorheological brake device (1) for braking relative motions, comprising at least two brake components (2, 3), wherein between the brake components (2, 3), a receiving space (4) with a braking gap (5) is formed, containing a magnetorheological medium (9) with magnetically polarizable particles (20) that can be influenced by a magnetic field, wherein at least one core and at least one electric coil unit (24) is comprised to generate a controllable magnetic field (8) in the braking gap (5), wherein at least part of the magnetically polarizable particles (20) is configured to form and to interlock an interlocking structure (15) under the influence of the magnetic field (8),
**characterized in**
**that** at least 25% of the magnetically polarizable particles (20), which are non-round particles (20a), have a ratio of maximum diameter (22) to maximum transverse extent (23) perpendicular thereto of greater than 1.25.

2. The apparatus (100) according to claim 1, wherein the magnetically polarizable particles (20) comprise non-round particles (20a), wherein the ratio of largest/maximum diameter (22) to largest/maximum transverse extent (23) perpendicular thereto is greater than 1.5.

3. The apparatus (100) according to any of the preceding claims, wherein at least part of the magnetically polarizable particles (20) is configured to interlock under the influence of the magnetic field (8) at two or more locations (26, 27) spaced apart from one another,
and/or wherein at least part of the magnetically polarizable particles (20) have at least one trough section (28), and/or wherein at least part of the magnetically polarizable particles (20) have an angled structural section (30).

4. The apparatus (100) according to any of the preceding claims, wherein a projection or an edge of a particle interlocks with a recess or a trough section of another particle, and/or wherein at least one surface of at least one brake component (2, 3) adjoining the braking gap (5) is at least partially non-smooth and has elevations (18) and/or depressions (19) configured to reinforce interlocking with the particles (20).

5. The apparatus (100) according to any of the preceding claims, wherein a minimum gap height (6a) of the braking gap (6) between the brake components (2, 3) is larger than twice the largest transverse extent (23) perpendicular to the maximum diameter (22) of the magnetically polarizable particles (20) in the braking gap (6).

6. The apparatus (100) according to any of the preceding claims, wherein at least 50% of the magnetically polarizable particles (20) have a ratio of maximum diameter (22) to maximum transverse extent (23) perpendicular thereto of larger than 1.25, and/or wherein at least 25% of the magnetically polarizable particles (20) have a maximum diameter (22) and/or a maximum transverse extent (23) of at least 10 µm or at least 20 µm, and/or wherein at least 25% of the magnetically polarizable particles (20) have a maximum diameter (22) of at least 30 µm or 50 µm.

7. The apparatus (100) according to any of the preceding claims, wherein the two brake components (2, 3) are pivotable relative to one another and/or continuously rotatable relative to one another.

8. The apparatus (100) according to any of the preceding claims, wherein the electrical coil unit (10) is wound radially or axially around the core (7).

9. The apparatus (100) according to any of the preceding claims, wherein the braking gap (5) completely surrounds the inner component (2a), and wherein the braking gap (5) is in particular configured as a circumferential annular gap.

10. The apparatus (100) according to any of the preceding claims, wherein at least one brake component (2, 3) has a star contour (47), which projects towards the other of the brake components and which generates/provides a gap height (46) that is variable over the circumference or the length of the braking gap (5).

11. The apparatus (100) according to any of the preceding claims, wherein at least one rotary body (44) is disposed in a gap section (45) of the braking gap.

12. The apparatus (100) according to any of the preceding claims, wherein the magnetorheological medium (9) comprises for a carrier medium, at least one liquid in which the magnetically polarizable particles (20) are received, wherein the magnetically polarizable particles (20) in particular constitute between 25 and 50 percent by volume in the receiving space (4), or wherein the magnetorheological medium (9) comprises for a carrier medium, at least one gas surrounding the magnetically polarizable particles (20), wherein the magnetically polarizable particles (20) in particular constitute between 40 and 90 percent by volume in the receiving space (4).

13. The apparatus (100) according to any of the preceding claims, comprising an operating member (101) connected with the magnetorheological brake device (1), and wherein the operating member (100) comprises an operating roller (103) and/or an operating knob (104), and wherein the magnetorheological brake device (1) is at least partially received in the interior of the operating member (101).

14. A method (100) for braking relative motions of at least two brake components (2, 3) of a magnetorheological brake device (1), wherein between the brake components (2, 3), a receiving space (4) with a braking gap (5) is formed, containing a magnetorheological medium (9) with magnetically polarizable particles (20) that can be influenced by a magnetic field, wherein an electric coil unit (24) generates a magnetic field (8) in the braking gap (5), to form, under the influence of the magnetic field (8), an interlocking structure (15) over at least part of the magnetically polarizable particles (20) in the braking gap, to thereat interlock magnetically polarizable particles (20), and that at least 25% of the utilized, magnetically polarizable particles (20), which are non-round particles (20a), have a ratio of maximum diameter (22) to maximum transverse extent (23) perpendicular thereto of larger than 1.25.

15. The method according to the preceding claim, wherein the magnetic field strength between individual particles is above 500 kA/m, and wherein the concentration of particles in the braking gap is higher than 40%.

## Revendications

1. Dispositif (100) avec un dispositif de freinage magnétorhéologique (1) pour le freinage de mouvements relatifs, comprenant au moins deux composants de freinage (2, 3), entre lesdits composants de freinage (2, 3) étant formé un espace de réception (4) avec un espace de freinage (5) qui contient un milieu magnétorhéologique (9) contenant des particules magnétiquement polarisables (20) et influençable par un champ magnétique, dans lequel au moins un noyau et au moins une unité de bobine électrique (24) sont compris afin de générer un champ magnétique commandable (8) dans l'espace de freinage (5),
dans lequel au moins une partie des particules magnétiquement polarisables (20) est conçue pour former une structure de calage (15) sous l'influence du champ magnétique (8) et pour se serrer entre elles,
**caractérisé par le fait que** pour au moins 25 % des particules magnétiquement polarisables (20), un rapport du diamètre maximal (22) à l'extension transversale maximale (23) perpendiculaire à celui-ci est supérieur à 1,25, qui sont présentes sous forme de particules non rondes (20a).

2. Dispositif (100) selon la revendication 1, dans lequel les particules magnétiquement polarisables (20) comprennent des particules non rondes (20a) dans lesquelles un rapport du diamètre le plus grand/maximal (22) à l'extension transversale la plus grande/maximale (23) perpendiculaire à celui-ci est supérieur à 1,5.

3. Dispositif (100) selon l'une quelconque des revendications précédentes, dans lequel au moins une partie des particules magnétiquement polarisables (20) est conçue pour se serrer les unes contre les autres sous l'effet du champ magnétique (8) sur deux ou plusieurs points (26, 27) espacés les uns des autres, et/ou dans lequel au moins une partie des particules magnétiquement polarisables (20) présente au moins une section en creux (28) et/ou dans lequel au moins une partie des particules magnétiquement polarisables (20) présente une section structurelle coudée (30).

4. Dispositif (100) selon l'une quelconque des revendications précédentes, dans lequel une saillie ou un bord d'une particule se serre contre un retrait ou une section en creux d'une autre particule
et/ou dans lequel au moins une surface d'au moins un composant de frein (2, 3) adjacente à l'espace de freinage (5) est réalisée, au moins par sections, de manière non lisse et présente des élévations (18) et/ou des dépressions (19) afin de renforcer un calage avec les particules (20).

5. Dispositif (100) selon l'une quelconque des revendications précédentes, dans lequel une hauteur d'espace minimale (6a) de l'espace de freinage (6) entre les composants de frein (2, 3) est supérieure à deux fois l'extension transversale maximale (23) perpendiculaire au diamètre maximal (22) des particules magnétiquement polarisables (20) dans l'espace de freinage (6).

6. Dispositif (100) selon l'une quelconque des revendications précédentes, dans lequel, pour au moins 50 % des particules magnétiquement polarisables (20), un rapport du diamètre maximal (22) à l'extension transversale maximale (23) perpendiculaire à celui-ci est supérieur à 1,25
et/ou dans lequel au moins 25 % des particules magnétiquement polarisables (20) présentent un diamètre maximal (22) et/ou une extension transversale maximale (23) d'au moins 10 µm ou d'au moins 20 µm
et/ou dans lequel au moins 25 % des particules magnétiquement polarisables (20) présentent un diamètre maximal (22) d'au moins 30 µm ou 50 µm.

7. Dispositif (100) selon l'une quelconque des revendications précédentes, dans lequel les deux composants de frein (2, 3) peuvent pivoter l'un par rapport à l'autre et/ou peuvent tourner en continu l'un par rapport à l'autre.

8. Dispositif (100) selon l'une quelconque des revendications précédentes, dans lequel l'unité de bobine électrique (10) est enroulée radialement ou axialement autour du noyau (7).

9. Dispositif (100) selon l'une quelconque des revendications précédentes, dans lequel l'espace de freinage (5) entoure complètement le composant intérieur (2a) et dans lequel l'espace de freinage (5) est conçu en particulier en tant qu'espace annulaire circonférentiel.

10. Dispositif (100) selon l'une quelconque des revendications précédentes, dans lequel un contour en étoile (47) faisant saillie vers l'autre composant de frein respectif est réalisé sur au moins un composant de frein (2, 3), lequel contour en étoile crée/fournit une hauteur d'espace (46) variable sur la circonférence ou la longueur de l'espace de freinage (5).

11. Dispositif (100) selon l'une quelconque des revendications précédentes, dans lequel au moins un corps rotatif (44) est disposé dans une section d'espace (45) de l'espace de freinage.

12. Dispositif (100) selon l'une quelconque des revendications précédentes, dans lequel le milieu magnétorhéologique (9) comprend au moins un liquide comme milieu porteur dans lequel sont logées les particules magnétiquement polarisables (20), les particules magnétiquement polarisables (20) font en particulier entre 25 et 50 % en volume dans l'espace de réception (4) ou dans lequel le milieu magnétorhéologique (9) comprend au moins un gaz en tant que milieu porteur entourant les particules magnétiquement polarisables (20), dans lequel les particules magnétiquement polarisables (20) font en particulier entre 40 et 90 % en volume dans l'espace de réception (4).

13. Dispositif (100) selon l'une quelconque des revendications précédentes, comprenant un élément de commande (101) relié au dispositif de freinage magnétorhéologique (1), et dans lequel l'élément de commande (100) comprend un rouleau de commande (103) et/ou un bouton de commande (104), et dans lequel le dispositif de freinage magnétorhéologique (1) est logé au moins en partie à l'intérieur de l'élément de commande (101).

14. Procédé (100) de freinage de mouvements relatifs d'au moins deux composants de frein (2, 3) d'un dispositif de freinage magnétorhéologique (1), dans lequel un espace de réception (4) avec un espace de freinage (5) est formé entre les composants de frein (2, 3) et contient un milieu magnétorhéologique (9) contenant des particules magnétiquement polarisables (20) et influençable par un champ magnétique, dans lequel un champ magnétique (8) est généré dans l'espace de freinage (5) par une unité de bobine électrique (24) afin de former une structure de calage (15) sur au moins une partie des particules magnétiquement polarisables (20) dans l'espace de freinage sous l'influence du champ magnétique (8) et afin de caler des particules magnétiquement polarisables (20) entre elles sur celle-ci.
et que pour au moins 25 % des particules magnétiquement polarisables (20) utilisées, un rapport du diamètre maximal (22) à l'extension transversale maximale (23) perpendiculaire à celui-ci est supérieur à 1,25, qui sont présentes sous forme de particules non rondes (20a).

15. Procédé selon la revendication précédente, dans lequel l'intensité du champ magnétique entre les particules individuelles est supérieure à 500 kA/m et dans lequel la concentration de particules dans l'espace de freinage est supérieure à 40 %.
